Europäisches Patentamt

European Patent Office

Office européen des brevets

(19)

(11) Publication number: **0 048 977**
**A2**

(12) **EUROPEAN PATENT APPLICATION**

(21) Application number: **81107643.9**

(22) Date of filing: **25.09.81**

(51) Int. Cl.³: **H 05 B 41/24**

(30) Priority: **26.09.80 JP 133959/80**

(43) Date of publication of application: **07.04.82**
**Bulletin 82/14**

(84) Designated Contracting States: **DE FR GB NL**

(71) Applicant: **Toshiba Electric Equipment Corporation,
1-43, 1-chome, Shibaura, Minato-ku Tokyo (JP)**

(72) Inventor: **Koshimura, Yasunobu, 3-15-6, Shimizu,
Suginami-ku Tokyo (JP)**
Inventor: **Aoike, Nanjou, 931-226, Kuden-cho, Totsuka-ku
Yokohama-shi (JP)**
Inventor: **Kobayashi, Hisao,
505 Mutsuaiekimae-kosojutaku 1106 Kameino,
Fujisawa-shi Kanagawa-ken (JP)**

(74) Representative: **Lehn, Werner, Dipl.-Ing. et al, Hoffmann,
Eitle & Partner Patentanwälte
Arabellastrasse 4 (Sternhaus), D-8000 München 81 (DE)**

(54) **Discharge lamp operating apparatus.**

(57) An inverter (6) generates a high frequency output having a pulsating envelope, and its output circuit includes two resonant circuits (20, 21), which are set such that their respective resonant frequencies ($f_1$, $f_2$) are made substantially equal and constant irrespective of the impedance of a high pressure discharge lamp (17).

EP 0 048 977 A2

- 1 -

## Discharge lamp operating apparatus

This invention relates to discharge lamp operating apparatus using high pressure discharge lamps such as a high pressure sodium lamp.

Prior art discharge lamp operating apparatus include those which use high frequency generators, for instance a self-exciting inverter. Such an inverter converts a rectified output obtained from an alternating current power source to a high frequency output having a pulsating envelope resulting from the self-excited oscillation, the output being supplied to the discharge lamp. In case of a low pressure discharge lamp, no problem occurs even if the internal impedance varies due to such a pulsating high frequency output. However, the device presents a problem when used for such high pressure discharge lamp as the high pressure sodium lamp, a mercury lamp and a metal halide lamp. When a high pressure discharge lamp is energized by the high frequency output of the inverter having a pulsating envelope in synchronism to the power source frequency, the internal impedance of the high pressure discharge lamp changes in response to the pulsating voltage. Since the oscillating frequency of the self-exciting inverter changes in response to the change of a load i.e. the internal impedance of the high pressure discharge lamp, the impedance change causes changes in the inverter output frequency. By way of example, it has been known that if the output frequency of the inverter is, for instance, 30 kHz in the operating state of the high pressure sodium lamp being driven by a peak value of the pulsating envelope, it is changed to as high as 40 kHz when light load state of the inverter is brought about with the increase of the internal impedance of the lamp caused by the reduction of the inverter output level to the dale of the pulsating envelope. This is known as the inherent problem of the self-exciting inverter.

In the mean time, it is known that an unstable state of such a high pressure discharge lamp is caused by an acoustic resonance. This phenomenon occurs when the inverter output frequency comes to assume a value in a certain relation to an acoustically natural frequency of the lamp itself. The acoustical resonance causes the high pressure discharge lamp to be unstable state such as the meandering of the discharge arc of flicker. According to the experiments by the inventors using the high pressure sodium lamp of 250 Watt type, for instance, there are so many frequency ranges in which the acoustical resonance phenomenon occurs. For instance, when the inverter output frequency is set between 27 kHz and 37 kHz, no acoustic resonance phenomenon occurs. According, even if the rated output frequency is set between 27 kHz and 37 kHz, for instance, the unstable operating state as mentioned above is liable to result when inverter output frequency increases in response to the light load (lamp impedance is high) and even a part of the high frequency included in the pulsating envelope becomes more than 37 kHz. In the utmost case, the high pressure discharge lamp ceases to operate.

An object of the invention is to provide a discharge lamp operating apparatus, which can stably operate a high pressure discharge lamp with the impedance thereof subject to changes with pulsation of the envelope of a high frequency output of a high frequency generator.

According to the invention, there is provided a discharge lamp operating apparatus comprising a high frequency generator for generating a high frequency output having a pulsating envelope, and a discharge lamp energized by said high frequency output, the high frequency generator including a first and a second resonant circuit respectively having a first and a second resonant frequency corresponding to the maximum and minimum of the internal impedance of the discharge lamp, the first and second resonant frequencies being set within a stable operation frequency range which is between two adjacent acoustical resonance frequency ranges peculiar to the discharge lamp.

This invention can be more fully understood from the following detailed description when taken in conjunction with the accompanying drawings, in which:

Fig. 1 is a circuit diagram showing an embodiment of the discharge lamp device according to the invention;

Figs. 2A and 2B are views showing the output waveform of a rectifier and the output waveform of a high frequency generator;

Fig. 3 is a view showing the relation between the operation state of a high pressure sodium lamp and the lamp energizing frequency;

Fig. 4 and Fig. 5 are views respectively showing the relation between the operation state of a mercury lamp and a metal halide lamp and the lamp energizing frequency;

Fig. 6 is a circuit diagram showing a part of the modification of the Fig. 1 embodiment; and

Figs. 7 and 8 show different resonant circuits used in another embodiments of this invention, respectively.

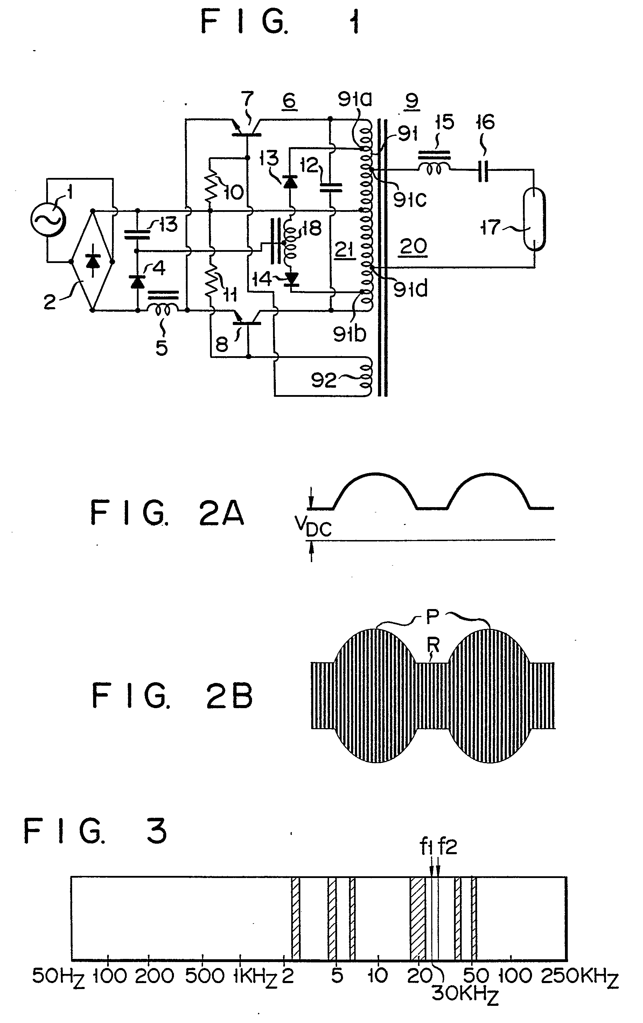

Referring now to Fig. 1, a commercial alternating frequency power source 1, for instance at 50 Hz, is connected between alternating input terminals of a full-wave rectifier 2. Between the direct current output terminals of the full-wave rectifier 2 is connected a series circuit of a capacitor 3 and a diode 4. The negative output terminal of the full-wave rectifier 2 is also connected through an inductor 5 to the emitter of pair transistors 7 and 8 which constitute a self-exciting inverter 6 serving as a high frequency generator circuit. The inverter 6 has a push-pull circuit construction, and the transistors 7 and 8 have their collectors connected to the opposite ends of a main winding 91 of an output transformer 9. The transistors 7 and 8 also have their bases connected through respective start resistors 10 and 11 to be positive output terminal of the rectifier 2 and also to the center tap of the main winding 91. The output transformer 9 includes a feedback winding 92 having the opposite ends connected to the bases of the respective transistors 7 and 8. A capacitor 12 is connected across the main winding 91 of the output transformer 9. The main winding 91 of this transformer has first to fourth intermediate taps 91a, 91b, 91c and 91d. Two diodes 13 and 14 and an inductor 18 are connected in series between the first and second intermediate taps 91a and 19b. The diodes 13 and 14 are connected in opposite polarity relation to each other. The center tap of the inductor 18 is connected to the juncture between the capacitor 3 and the cathode of the diode 4. A high pressure discharge lamp 17, for instance a high pressure sodium lamp is connected in series with an inductor 15 and a capacitor 16 between the intermediate taps 91c and 91d of the main winding 91.

In the discharge lamp operating apparatus having the afore-described construction shown in Fig. 1, the commerical frequency alternating current from the power source 1 is rectified and converted to a pulsating current in the full-wave rectifier 2. This pulsating current is combined with a direct current voltage $V_{DC}$ developed across the capacitor 3, and the resultant current of a pulsating waveform as shown in Fig. 2A is supplied to the inverter 6. The inverter 6 is energized by the pulsating current having the waveform shown in Fig. 2A and generates a high frequency output having an envelope as shown in Fig. 2B. The oscillating operation of the inverter 6 is fully described in, for instance, USSN 237269 filed on February 23, 1981, and its further detailed description is omitted.

As the high frequency output of the inverter 6, as shown in Fig. 2B, is supplied to the high pressure sodium lamp 17, the lamp 17 is driven substantially at the rated level in the neighborhood of the peak P of the pulsating envelope. At this time, the impedance of the lamp 17 is as low as is ignorable, and the inverter 6 generates an output at an operating frequency $f_1$, which is determined by a first resonant circuit 20 constituted by the main winding 91 and capacitor 16. This operating frequency $f_1$ is given as

$$f_1 = \frac{1}{2\pi\sqrt{L_1 C_1}} \qquad \ldots\ldots (1)$$

where $L_1$ is the inductance of the main winding 91 viewed from the load side, and $C_1$ is capacitance of the capacitor 16. The values of $L_1$ and $C_1$ are selected such that the operating frequency $f_1$ is 30 kHz as shown in Fig. 3.

In the neighborhood of the bottom R of the pulsating envelope, the lamp impedance becomes large. At this time, the inverter 6 is in a substantial light load state and generates an output at an operating frequency $f_2$, which is determined by a resonant circuit 21 constituted by the main winding 91 and a capacitor 12. This operating frequency $f_2$ is given as

$$f_2 = \frac{1}{2\pi\sqrt{L_2 C_2}} \qquad \ldots\ldots (2)$$

where $L_2$ is the inductance of the main winding 91 viewed from the power source and $C_2$ is the capacitance of the capacitor 12. The values of $L_2$ and $C_2$ are set such that the operating frequency $f_2$ at this time is near 30 kHz as shown in Fig. 3.

With the parameters of the resonant circuits 20 and 21 set such that the output frequency $f_1$ at the peak P of the pulsating envelope and the output frequency $f_2$ at the bottom R, at which the lamp impedance is large, are near as described above, it is possible to make the operating frequency constant irrespective of changes in the impedance of the lamp 17. The output frequencies $f_1$ and $f_2$ need not be set equal but may be set to any frequency within a range from 27kHz to 37 kHz shown in Fig. 3, within which stable operation is ensured. In Fig. 3, the hatched portions are frequency bands in which accoustic resonance phenomenon occurs. Therefore, the output frequencies $f_1$, $f_2$ of the inverter 6 should be set within the frequency range other than the hatched portions.

With the above construction, which permits the operating frequency of the lamps to be set within a range in which the acoustic resonance will not readily occur, it is possible to provide a discharge lamp operating apparatus which is capable of steadily driving a high pressure discharge lamp.

The above embodiment is by not means limitative, and various changes and modifications can be made without departing from the scope and spirit of the invention.

For example, while the above embodiment has concerned with the high pressure sodium lamp as the discharge lamp, the invention can of course be applicable to such other discharge lamps as mercury lamps and metal halide lamps, the impedance of which is variable with the pulsation of the envelope of the inverter high frequency output.

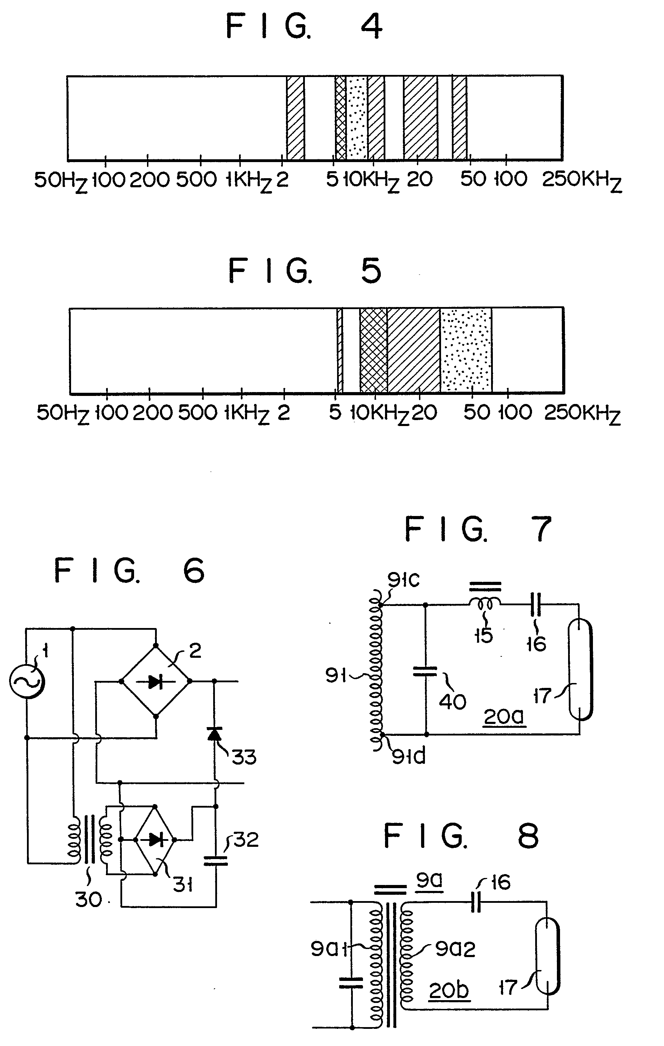

The operating characteristic of the mercury lamps and the metal halide lamps are shown in Figs. 4 and 5, respectively. In these figures, blank portions are stable operation frequency areas in which the mercury lamps and metal halide lamps can be operated stably. On the other hand, dotted portions and hatched portions are frequency bands of unstable operation and cross-hatched portions are those in which lamps are liable to be extinguished.

Further, it is possible to replace the inverter as the high frequency generator shown in Fig. 1 with an inverter which is constructed without using the capacitor 3, diodes 4, 13 and 14 and inductor 18. In this case, only the pulsating output of the full-wave rectifier free from the direct current component $V_{DC}$ shown in Fig. 2A is supplied, and the high frequency output of the inverter 6 is completely zero at the node unlike the bottom R shown in Fig. 2B.

Figs. 6 to 8 show circuit diagrams of modified embodiments of this invention. The embodiment of Fig. 6 has an auxiliary DC voltage $V_{DC}$ generating circuitry which is constituted with a transformer 30, a full-wave rectifier 31, a condenser 32 and a diode 33. The primary winding of the transformer 30 is connected across the power source 1. The secondary winding of the transformer 30 is connected across the AC input terminals of the full-wave rectifier the DC output terminals of which are connected across the condenser 32. Thus, the DC voltage $V_{DC}$ obtained across the condenser 32 is superimposed through the diode 33 with the pulsating voltage obtained from the full-wave rectifier 2. The resultant voltage has a waveform similar to that shown in Fig. 2A and is supplied to an inverter like one shown in Fig. 1.

Fig. 7 shows a modified resonant circuit 20a connected on the secondary side of the output transformer 9 shown in Fig. 1. In this modification a condenser 40 is connected between the intermediate taps 91c and 91d of the main winding 91. The remaining constituents of the resonant circuit 20a are the same as the circuit 20 of Fig. 1.

Fig. 8 shows a further modified resonant circuit 20b connected on a secondary winding 9a2 of a leakage transformer 9a. The primary winding 9a1 of the transformer 9a may be connected to the collectors of the transistors 7, 8 of Fig. 1, respectively. In this modification only the condensor 16 is connected in the resonant circuit 20b.

Claims:

1. A discharge lamp operating apparatus comprising a high frequency generator (6) for generating a high frequency output having a pulsating envelope, and a discharge lamp (17) energized by said high frequency output, said high frequency generator (6) including a first and a second resonant circuit (20, 21) respectively having a first and a second resonant frequency ($f_1$, $f_2$) corresponding to the maximum and minimum of the internal impedance of said discharge lamp (17) respectively, said first and second resonant frequencies ($f_1$, $f_2$) being set within a stable operation frequency range which is between two adjacent acoustical resonance frequency ranges peculiar to said discharge lamp (17).

2. The discharge lamp operating apparatus according to claim 1, wherein said first and second resonant frequencies ($f_1$, $f_2$) are set substantially equal.

3. The discharge lamp operating apparatus according to claim 1, wherein said discharge lamp (17) is a high pressure discharge lamp such as a high pressure sodium lamp, a mercury lamp and a metal halide lamp.

4. The discharge lamp operating apparatus according to claim 1, wherein said high frequency generator (6) is a push-pull transistor inverter including pair transistors (7, 8) and an output transformer (9).

5. The discharge lamp operating apparatus according to claim 4, wherein said output transformer (9) is a leakage transformer (9a) having a secondary winding (9a2) connected in series with a capacitor (16) and the discharge lamp (17) to form a first resonant circuit (20b).

6. The discharge lamp operating apparatus according to claim 1, wherein said first resonant circuit (20) includes the main winding (91) of said output transformer (9) and a capacitor (16), and said second resonant circuit (21) includes the main winding (91) of said output transformer (9) and a capacitor (12).

7. The discharge lamp operating apparatus according to claim 6, wherein said first resonant circuit (20) further comprises a further capacitor (40) connected across two intermediate taps (91c, 91d) of the main winding (91).

8. The discharge lamp operating apparatus according to claim 1, wherein said high frequency generator (6) is energized by a direct current voltage consisting of a pulsating voltage from a full-wave rectifier (2) and a direct current voltage obtained across a capacitor (3) superimposed upon said pulsating voltage.

9. The discharge lamp operating apparatus according to claim 1, wherein said high frequency generator (6) is energized by a direct current voltage consisting of a pulsating voltage obtained from a full-wave rectifier (2) and an auxiliary DC voltage generating circuit constituted with a transformer (30) with a primary winding connected across an AC power source (1), an auxiliary full-wave rectifier (31) for rectifying the output of the transformer (30), and a condenser (32) connected across the DC output terminals of the auxiliary full-wave rectifier (31).

# F I G. 1

# F I G. 2A

$V_{DC}$

# F I G. 2B

P

R

# F I G. 3

f1 f2

50Hz 100 200 500 1KHz 2  5  10  20  50 100 250KHz

30KHz

F I G. 4

F I G. 5

F I G. 6

F I G. 7

F I G. 8